# EUROPEAN PATENT APPLICATION

(11) **EP 2 394 901 A1**
(43) Date of publication of application: **14.12.2011**
(21) Application number: 10738205.3
(22) Date of filing: 27.01.2010
(51) Int. Cl.: B62M 3/08, B62M 1/04

(54) **RECIPROCATING-TYPE VARIABLE-SPEED PEDAL STRUCTURE FOR SCOOTER**

(30) Priority: 09.02.2009 CN 200910058296
(71) Applicant: Lin, Suqin, Guangdong 523960 (CN)
(72) Inventor: SUN, Qun, Dongguan Guangdong 523960 (CN)
(74) Representative: McCarthy, Denis Alexis
(86) International application number: PCT/CN2010/070371
(87) International publication number: WO 2010/088849

(57) **Abstract**

The utility model discloses a reciprocating variable speed pedal structure for a scooter. The reciprocating variable speed pedal structure comprises a power pressure bar (2) movably connected to a scooter bracket (1), and is **characterized by** further comprising a power pressure bar return mechanism (A) capable of flexing one end of the power pressure bar upward, an upper end of the power pressure bar (2) is movably connected with a movable pedal (5) through a shaft (4) and divides the movable pedal into a movable pedal limit end and a movable pedal labor-saving end, and a movable connecting member (8) capable of limiting the motion range of the movable pedal is arranged between the front part of the movable pedal limit end and the scooter bracket. The reciprocating variable speed pedal structure is applied to two-wheel to four-wheel scooters, the pedaling mode coincide with human standing pedaling posture and is easy for a person to smoothly exert a force. Meanwhile, the reciprocating variable speed pedal structure has low, medium and high speed shifting effects and a high output power.

## Description

### Field of the Utility Model

The utility model relates to a scooter, in particular to a reciprocating variable speed pedal structure for a scooter.

### Description of the Related Art

In the patent documents disclosed, flexible pedals for scooters are generally of straight flexible pedal structures (hereinafter referred to as flat-plate pedal), such as pedal structures for scooters disclosed in Chinese patents ZL01237990.5 and ZL97230502.5. The flat-plate pedal is **characterized in that** the mounting position on a scooter bracket is generally higher, the stability is not easy to control, the feeling of leaning forward and tilting backward exists in pedaling, thus being unfavorable for pedaling to exert a force. Moreover, as the habitual distance (range) of pedaling up and down is about 16cm, restricting a power input stroke, the pedal structure of the prior art always has the problem of insufficient input power (or kinetic energy) in standing pedaling, causing the scooters to have too low speed, be unable to climb and have no structural speed shifting effects.

### Summary of the Utility Model

**A technical problem to be solved by the utility model is to** provide a reciprocating variable speed pedal structure for a scooter which coincide with human standing pedaling posture for exerting a force, has a larger input power and speed shifting effect.

A technical solution for solving the technical problem of the utility model is a reciprocating variable speed pedal structure comprising a power pressure bar movably connected to a scooter bracket, and characterized by further being provided with a power pressure bar return mechanism such that one end of the power pressure bar is flexed upward in a return state, thus a mounting position of the whole pedal structure on the scooter bracket is lower than that of the existing straight flexible pedals, and the center of gravity is low in use; an upper end of the power pressure bar is movably connected with a movable pedal through a shaft and divides the movable pedal into a movable pedal limit end and a movable pedal labor-saving end, and a movable connecting member capable of limiting the upward motion range of the movable pedal is arranged between the front part of the movable pedal limit end and the scooter bracket. As the central position of the movable pedal is movably connected with the upper end of the power pressure bar, and the upward rotating range of the front end part of the movable pedal limit end is restricted by the movable connecting member arranged, a certain included angle always exists between the movable pedal labor-saving end and the power pressure bar (i.e. the movable pedal labor-saving end is flexed upward) when the power pressure bar is in fully return upward flexing state (=upward flexing state at the highest position). At this time, there are three pedaling modes with three-step speed shifting effect: the first mode is pedaling at a low speed, that is, only the end point of the movable pedal labor-saving end is pedaled at first (for example, by the heel of the forward foot) until the end point of the movable pedal labor-saving end completes a downward labor-saving stroke. The action of the labor-saving stroke is maximized in the process, thus saving labor. Although the downward traveling stroke of the end point of the movable pedal labor-saving end is longer, the descent distance of the upper end of the power pressure bar is relatively short, thus the pedaling mode can be used while the scooter climbs. At this time, if the movable pedal is pedaled downward, the connecting endpoint part of the power pressure bar and the movable pedal is pedaled (for example, by the sole of the forward foot) until both the movable pedal and the power pressure bar are at a lowest position at the same time. The maximum power can be obtained in the pedaling mode, however, a single downward stroke of the power pressure bar is completed by two distinctly different pedaling motions, thus actually increasing the pedaling stroke, especially the longer pedaling stroke of the front section can improve kinetic energy, therefore, the pedaling mode has a medium speed and a high power or an increased output power. In addition, the design of the pedaling completed in two strokes is favorable for smoothly exerting force by the forward foot, and the lifting and pressing of feet also conform to the law of exerting force by pedaling in a standing posture, thus relieving fatigue. This is the second pedaling mode at a medium speed, that is, the end point of the movable pedal labor-saving end and the connecting endpoint part of the power pressure bar and the movable pedal are pedaled downward respectively (for example, by the heel and sole of the forward foot) until both the movable pedal and the power pressure bar are at a lowest position at the same time. Larger kinetic energy and faster traveling speed can be obtained in the pedaling mode. The third pedaling mode is pedaling at a high speed, that is, only the connecting endpoint part of the power pressure bar and the movable pedal is pedaled (by the sole of the forward foot) until both the movable pedal and the power pressure bar are at a lowest position at the same time, which allows the power pressure bar to quickly complete a full downward stroke displacement in a shortest pedaling stroke and time, thus achieving a high speed power output. The pedaling mode is applicable to high speed traveling of the scooter.

In the pedal structure, when the movable pedal labor-saving end is pedaled downward, the ratio of the down stroke at the end point of the movable pedal labor-saving end to the down stroke of the shaft connecting the movable pedal and the power pressure bar can be generally 1:1.2 - 3.0, preferably 1:1.7 - 2.3. When a position at the shaft connecting the movable pedal and the power pressure rod is pedaled to continue to input a power, the whole power input stroke is completed, increasing an input kinetic energy. The design has a better labor-saving effect in pedaling and obvious two-stage power output stroke.

The movable connecting member between the front part of the movable pedal limit end and the scooter bracket can be composed of a pull cord, a collapsible pull rod or a telescopic pull rod with two ends being connected with the front part of the movable pedal limit end and the scooter bracket respectively; and can be also composed of a limit stop mounted on the scooter bracket, and an upper edge of the front part of the movable pedal limit end can be in contact with the limit stop when the power pressure bar is in a return state. When the movable pedal is flexed upward to a highest position, the pull cord, the collapsible pull rod or the telescopic pull rod or the limit stop pulls or restricts the movable pedal, thus forming a certain included angle between the movable pedal and the power pressure bar, and facilitating the realization of two-stage pedaling.

The power pressure bar return mechanism is composed of a return pressure bar and a return pedal linked with the return pressure bar, and the return pressure bar and the power pressure bar form a flexible plate structure capable of moving up and down alternately, wherein the connection between the return pressure bar and the power pressure bar specifically includes but not limited to the following two solutions: one solution is that the return pressure bar and the power pressure bar are integrated to directly form a flexible plate structure which moves up and down alternately; and the second solution is that the return pressure bar and the power pressure bar are separated but coaxially (or heteroaxially) and movably connected to the scooter bracket, with a return connecting spring arranged therebetween, and the return connecting spring can cause the return pressure bar and the power pressure bar to move up and down in a linkage manner. In such a structure, first, the return pressure bar not only plays the return role of the power pressure bar, in other words, the return pressure bar can be designed to output a power, thus acting as the power pressure bar, at this time, the front power pressure bar and the rear power pressure bar are a return bar for each other; second, the return pressure bar and the return pedal can have the same structure and connection mode as those of the power pressure bar and the movable pedal, and the same movable connecting member capable of limiting the motion range of the pedal is arranged between the front part of the return pedal limit end and the scooter bracket. Thus, a set of reciprocating variable speed pedal structure of the same structure is provided at the front part and the rear part of the flexible plate structure.

The power pressure bar return mechanism can be also composed of a tension spring, a pressure spring, a torsion spring and an elastic cord arranged on the power pressure bar, or composed of shoe hooks or shoe covers arranged on the power pressure bars or the movable pedal. An elastic return mechanism or a shoe hook and cover return mechanism can cause the power pressure bar to return after being pedaled down, however, the elastic return mechanism has certain resistance on pedaling power, and the shoe hook and cover return mechanism lifts the movable pedal and the power pressure bar upward to return. Repeated lifting return easily produces some fatigue. Similarly, the reciprocating variable speed pedal structure composed of the power pressure bar, the movable pedal, the elastic return mechanism (or the shoe hook and cover return mechanism) and the movable connecting member limiting the motion range of the movable pedal can be two-set systems mounted on the scooter bracket in parallel.

Compared with the existing straight flexible pedals, the utility model has the following advantages: (1) the power pressure bar is flexed upward in a return state, allowing the mounting position of the power pressure bar on the scooter bracket to be relatively low, thus the center of gravity of a rider is low and stable in use; (2) the upward and downward reciprocating motion range of the power pressure bar is generally designed within 16cm, the range properly coincides with human reciprocating pedaling habits, too low motion range will cause insufficient output power and powerless at climbing, and too high motion range will easily produce fatigue. Such design can overcome insufficient output power of the standing reciprocating scooters currently available in the market; (3) there are two force acting points on the movable pedal, i.e. the end point of the movable pedal labor-saving end and an upper end point of the power pressure bar, thus there are three speed shifting pedaling modes, and the utility model can be considered as a low, medium and high speed shifting pedal structure, such speed shifting design improves the capability of the scooters to adapt to road conditions, causing the scooters to have some function of replacing walking; (4) the basic pedaling action of the movable pedal is completed by a two-stage pedaling stroke, for example, the movable pedal can be pedaled by the heel of the forward foot, and then gradually by the sole of the forward foot to exert force, which properly coincides with the pedaling posture and law of exerting force when a rider stands facing forward; The best human posture is that the raised forward foot is kept flat or straight sideways, and the raised backward foot is kept sideways or across when a rider stands facing forward to pedal, and the flexed movable pedal of the reciprocating variable speed pedal structure is more favorable for keeping the forward foot flat or straight sideways in the return state; if a flat-plate pedal of the prior art is employed, the pedal is not easy to be pedaled to exert a force when a rider stands facing forward, moreover, as the mounting position of the flexible pedal is higher, the front pedal and the rear pedal will tilt too much in use, thus easily resulting in fatigue of the forward foot and waist; (5) when the reciprocating variable speed pedal structure is pedaled to exert a force, the waist, hands and feet can be kept in a comfortable posture, thus being favorable for force exertion and physical exercise; and (6) it is worth noting that the "scooters" mentioned in the utility model refer to reciprocating scooters including scooters with handles and sliders without handle. As the utility model fundamentally solves the problem of power output, the reciprocating variable speed pedal structure can be designed as scooters with two wheels to four wheels, single motor to two motors, and front and rear pedals to right and left pedals for sporting goods to short-distance transport tools.

### Brief Description of the Drawings

The structure of the utility model will be further described in combination with drawings and embodiments.
Figure 1 is a structural diagram of the utility model.
Figure 2 is a schematic diagram of a two-stage pedaling stroke of a power pressure bar.
Figures 3 - 6 are structural diagrams of variants of Figure 1.
Figure 7 is a structural diagram of a collapsible pull rod.
Figure 8 is a structural diagram of a telescopic pull rod.
Figure 9 is a structural diagram of a pull rod with a chute.
Figure 10 is a schematic diagram of a connecting preformed hole arranged on the movable pedal.
Figure 11 is a structural diagram of a limit stop on the scooter bracket.
Figures 12 - 14 are other structural diagrams of the utility model.
Figure 15 is a further structural diagram of the utility model.
Figures 16 - 19 are other structural diagrams of the utility model.
Figure 20 is a schematic diagram of the connection mode of a torsion spring.
Figure 21 is a further structural diagram of the utility model.
Figure 22 is a schematic diagram of the connection mode of the torsion spring.
Figure 23 is a further structural diagram of the utility model.
Figure 24 is a schematic diagram of the connection mode of the torsion spring.
Figure 25 is a further structural diagram of the utility model.
Figure 26 is a schematic diagram of A-A section of Figure 25.
Figure 27 is a schematic diagram of the connection mode of a shoe cover.
Figure 28 is a structural diagram of the shoe cover.
Figures 29-30 are further structural diagram of the utility model.
Figures 31-33 are schematic diagrams of the connection mode between the movable pedal and the power pressure bar.
Figure 34 is a schematic diagram of the mounting height of a return pedal.

### Detailed Description of the Preferred Embodiments

### Example 1: flexible plate return single power reciprocating variable speed pedal structure

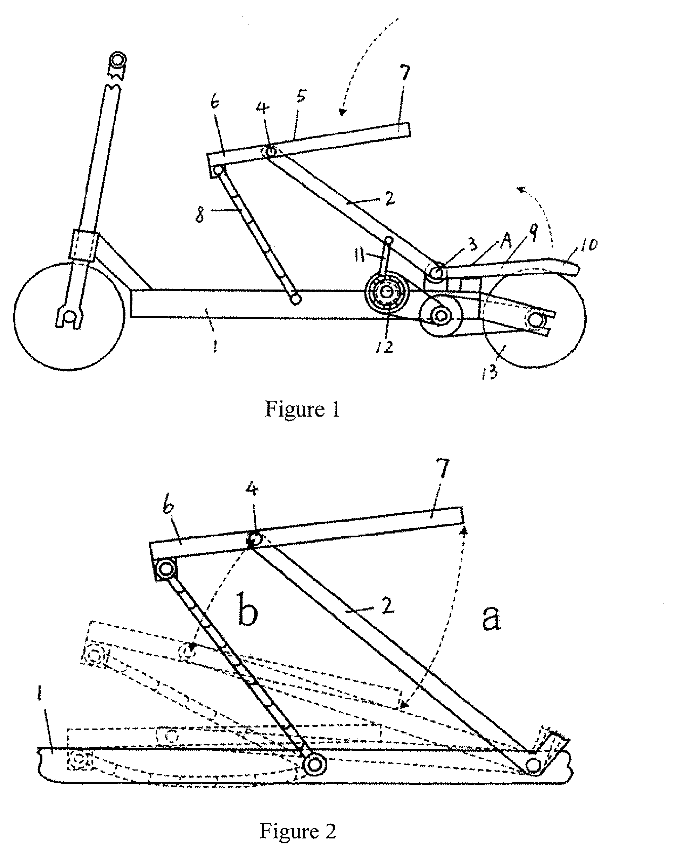

The reciprocating variable speed pedal structure of the example is a flexible plate return single power reciprocating variable speed pedal structure as shown in Figure 1. The reciprocating variable speed pedal structure comprises a power pressure bar 2 movably connected to a scooter bracket 1, the power pressure bar 2 is movably connected to the scooter bracket 1 through a shaft 3 actually, an upper end of the power pressure bar 2 is movably connected with a movable pedal 5 through a shaft 4 and divides the movable pedal into a limit end 6 and a labor-saving end 7, a movable connecting member 8 capable of limiting the motion range of the movable pedal is arranged between the front part of the movable pedal limit end and the scooter bracket and is of a pull cord or slide fastener structure. A power pressure bar return mechanism A is composed of a return pressure bar 9 and a return pedal 10 formed by an extension of the return pressure bar, wherein the return pressure bar 9 and the power pressure bar 2 are integrated to directly form a deformed V-shape flexible plate structure, thus realizing up and down motion and return of the power pressure bar. As shown in Figure 2, when the movable pedal labor-saving end is pedaled downward, the ratio of a down stroke a (i.e. the stroke of the labor-saving end point traveling from a highest point to be in parallel contact with or against the power pressure bar under the action of a pedaling force) at the end point of the movable pedal labor-saving end to a synchronous down stroke b of the shaft 4 connecting the movable pedal and the power pressure bar, i.e. a:b, can be generally 1:1.2 - 3.0, preferably 1:1.7-2.3. Power of the power pressure bar 2 is input to a power connecting bar 11 connected therewith, the power connecting bar 11 drives a ratchet 12 to rotate, and a rotating force of the ratchet drives a wheel 13 to rotate through a transmission shifting mechanism.

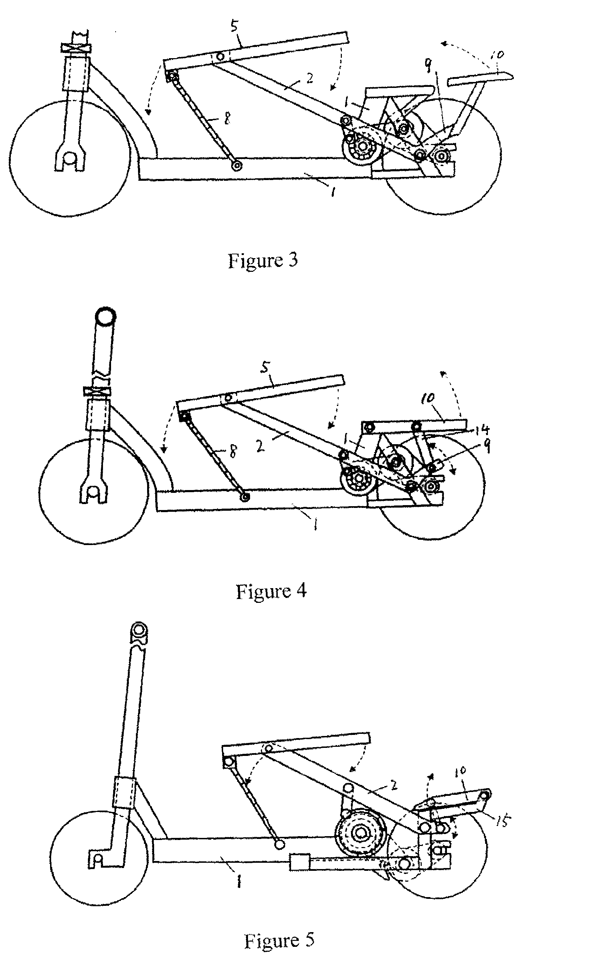

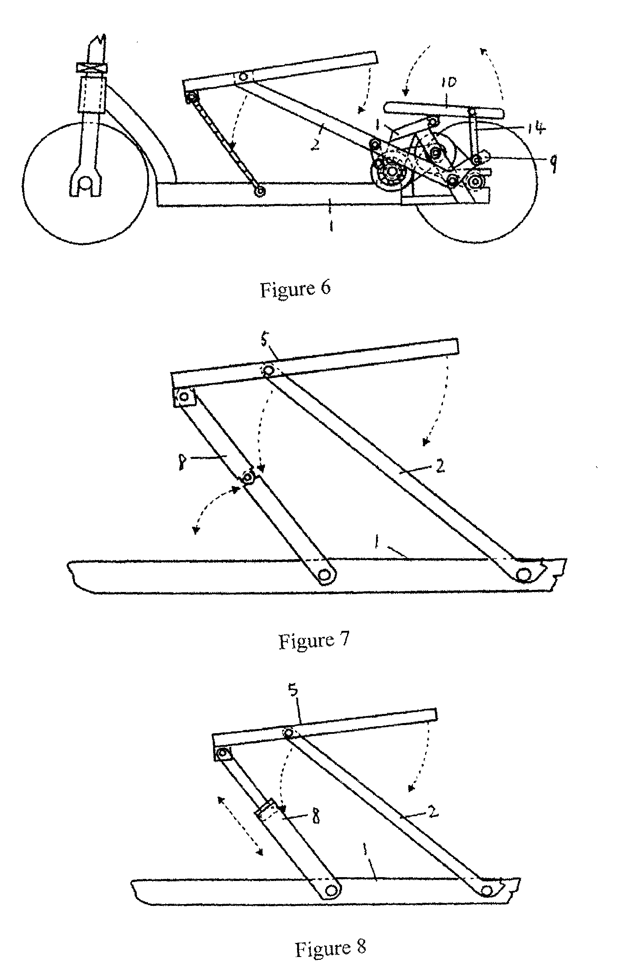

Figures 3 - 6 are structural diagrams of variants of Figure 1, the variants are **characterized in that** the scooter bracket is relatively close to the ground, which causes a relatively low mounting position of the power pressure bar, but structure of the return mechanism may be slightly changed. The return pressure bar 9 in Figure 3 extends upward and is connected to the return pedal 10 at the extension end. The return pressure bar 9 in Figure 4 is movably connected with a return connecting bar 14 through the shaft; and the other end of the return connecting bar is movably connected to the return pedal 10 through the shaft. The front end of the movable pedal 5 is movably connected to the raised scooter bracket 1 through the shaft. The connection mode of the return pedal 10 in Figures 5 - 6 is slightly different from that in Figure 4: the front and middle part of the return pedal 10 in Figure 5 is movably connected with the return connecting bar 14, the rear end part of the return connecting bar is movably connected with a rear extension bracket 15 of the scooter bracket. The approximately middle part of the return pedal 10 in Figure 6 is movably connected with the raised scooter bracket 1, and the rear end part thereof is movably connected with the return connecting bar 14. All of the solutions can realize mutual linkage between the return pedal and the return pressure bar.

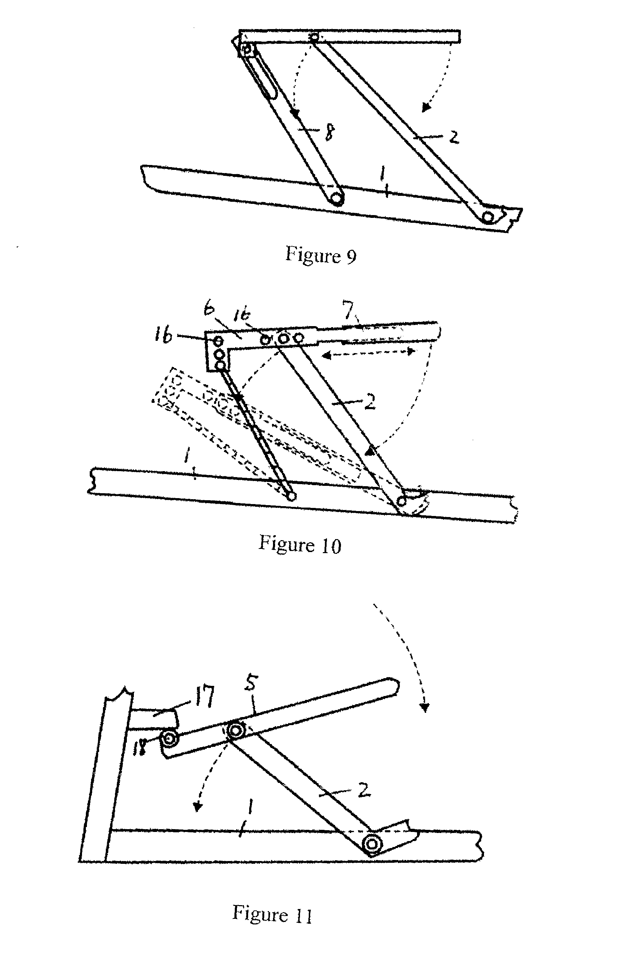

In above solutions, a pull cord or slide fastener as well as collapsible pull rod (see Figure 7), telescopic pull rod (see Figure 8) or pull rod with a chute (see Figure 9) may be employed as a movable connecting member 8 arranged between the front part of the movable pedal limit end and the scooter bracket. The movable pedal 5 can be provided with a multiple of preformed holes 16 (see Figure 10) connected with the connecting member 8 and the power pressure bar 2 so as to realize that the ratio of the movable pedal limit end 6 to the movable pedal labor-saving end 7 and the position connecting the connecting member 8 and the movable pedal limit end are adjustable. Of course, a telescopic mechanism can also be designed for the movable pedal labor-saving end to adjust length thereof directly (see Figure 10). Besides, the movable connecting member 8 arranged between the front part of the movable pedal limit end and the scooter bracket can be replaced with a limit stop 17 mounted on the scooter bracket, and a roller 18 can be added to the upper edge of the front part of the movable pedal limit end to reduce resistance (see Figure 11).

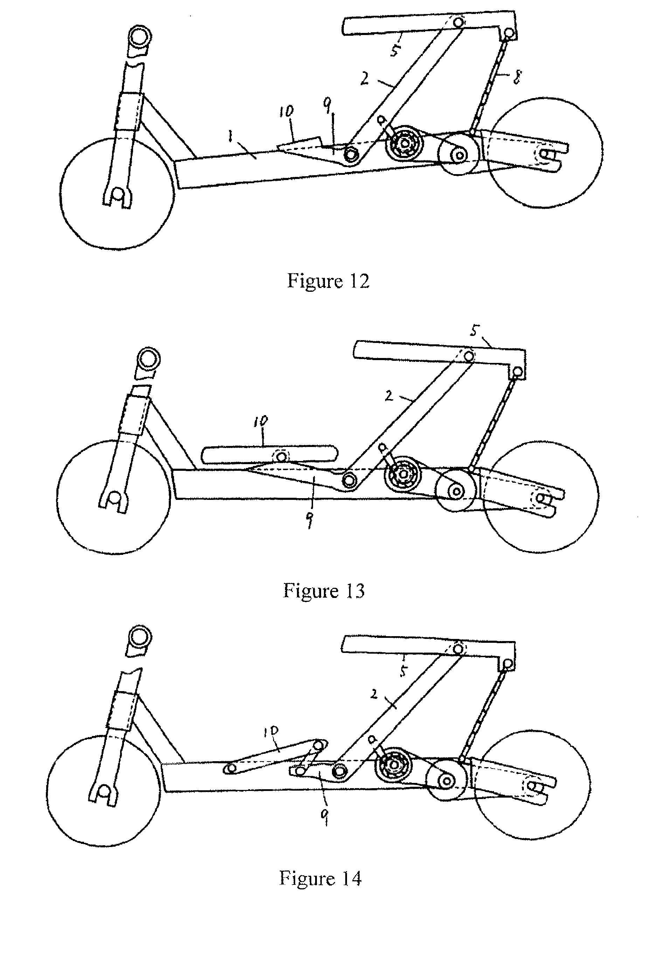

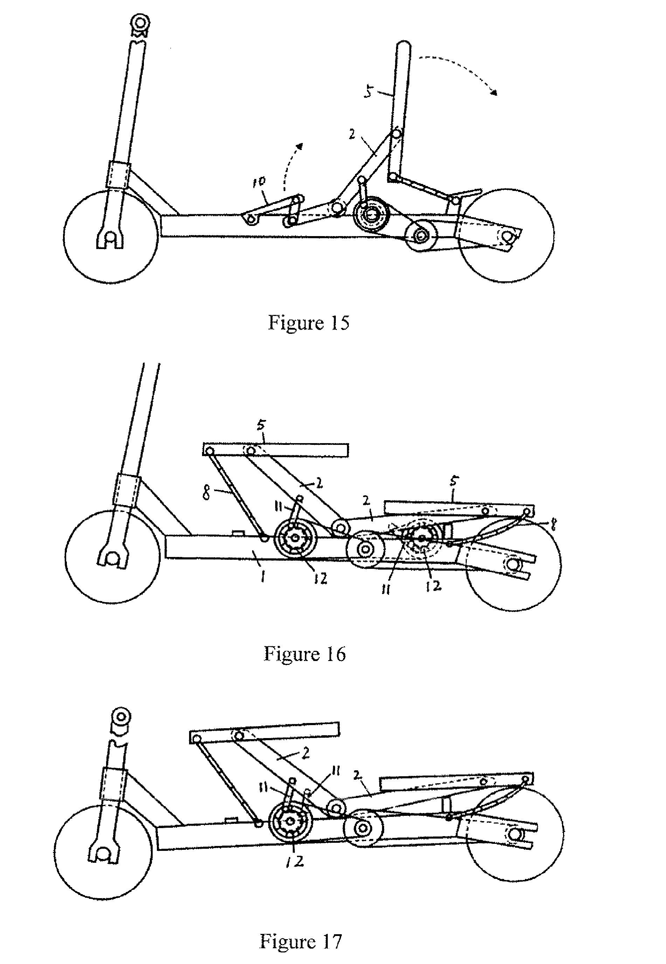

It is worth pointing out that a backward pedaling and forward return structure oppose to the structure can be used as the flexible plate return single power reciprocating variable speed pedal structure in this example (see Figures 12 - 14). In Figure 12, the upper part of the return pressure bar 9 directly forms the return pedal 10. In Figure 13, the return pedal 10 is movably connected to the return pressure bar 9. In Figure 14, the return pedal 10 is movably connected to the return pressure bar 9 or connected to the return pressure bar 9 through a connecting rod, but the front end of the return pedal 10 is movably connected to the scooter bracket 1. Furthermore, the structure of Figure 14 can be mounted as per the mode shown in Figure 15 to change the pedaling mode of the power output, that is, the backward pedaling mode in Figure 14 is changed to the backward thrusting mode in Figure 15.

### Example 2: flexible plate return double power reciprocating variable speed pedal structure

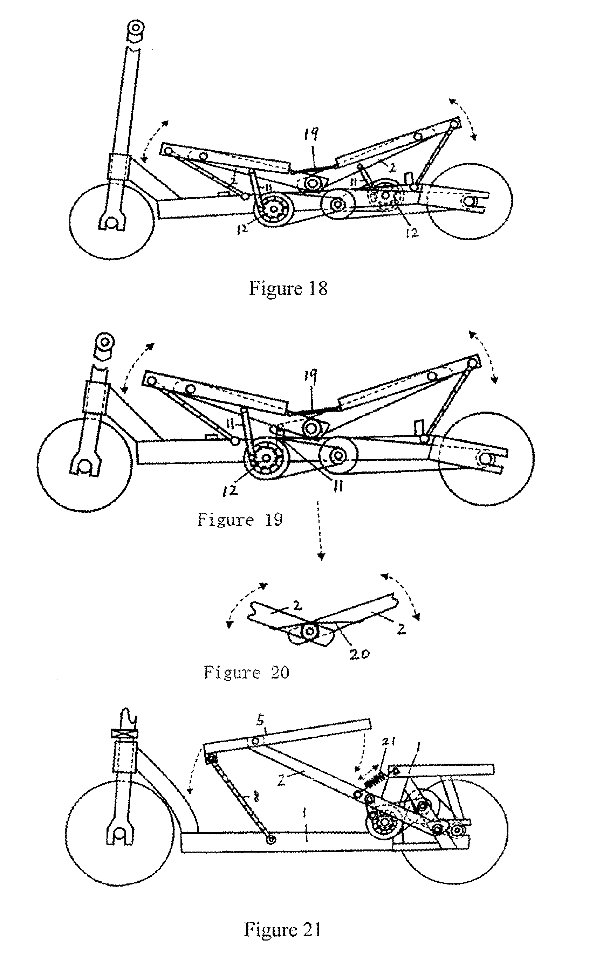

The reciprocating variable speed pedal structure in this example is of flexible plate return double power reciprocating variable speed pedal structure (see Figures 16 - 19). In Figure 16, there are two sets of the power pressure bars 2 (front and rear) which are integrated to directly form the flexible plate structure. During the up and down linkage, the power pressure bars can act as a return mechanism for each other and are provided with two sets of independent ratchet systems for power output which are also known as a heteraxial double ratchet structure. Figure 17 has the basically same structure as Figure 16, but a coaxial double ratchet structure is employed for the power output. In Figure 18, there are also two sets of power pressure bar 2 (front and rear) which are coaxially and movably connected to the scooter bracket, a connecting return spring 19 is arranged therebetween, thus the two power pressure bars in front and in rear can also form the flexible plate structure and mutually act as a return mechanism for each other during the up and down linkage. However, a mode of simultaneous forward and backward stepping can be used in Figure 18. Figure 19 has the basically same structure as Figure 18, but the coaxial double ratchet structure is employed for the power output, and the power connecting bar 11 on the power pressure bar 2 is arranged at front extension part of the power pressure bar. The connecting return spring 19 in Figures 18 - 19 can be replaced with a torsion spring 20 (see Figure 20).

In fact, generally a power connecting bar can be added to the return pressure bar for the power output in the flexible plate return reciprocating variable speed pedal structures in example 1 to form the double power reciprocating variable speed pedal structure.

### Example 3: elastic return single power reciprocating variable speed pedal structure

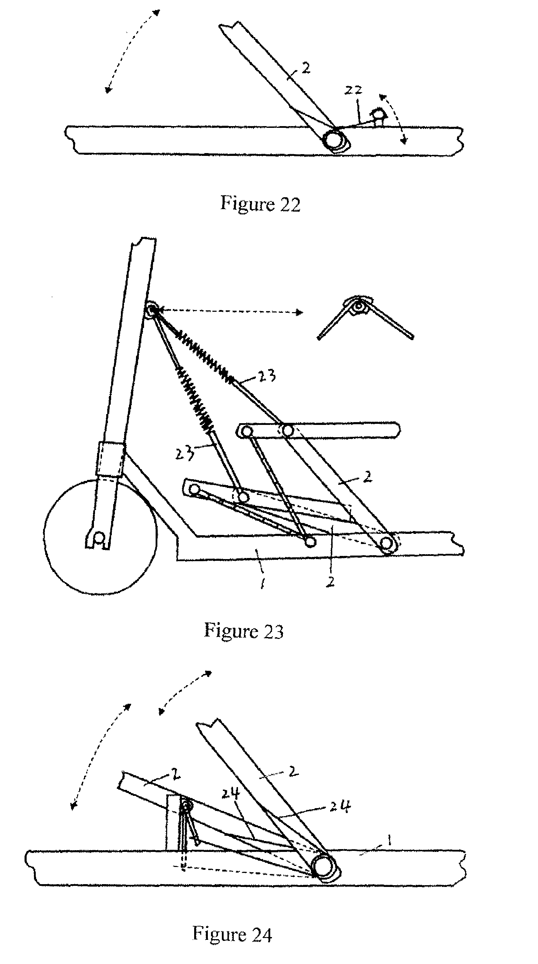

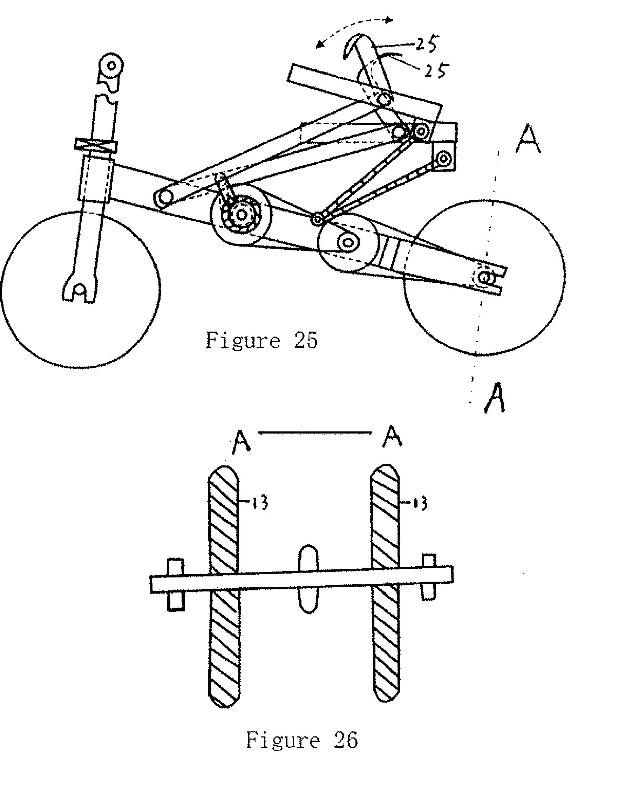

The reciprocating variable speed pedal structure in this example is of an elastic return single power reciprocating variable speed pedal structure (see Figure 21). In Figure 21, a tension spring 21 or a torsion spring 22 (Figure 22) can be used as the return mechanism A of the power pressure bar 2. Of course, Figures 21-22 can use a pressure spring, an elastic cord as shown in Figure 23 or a shoe hook and shoe cover structure as shown in Figures 25 - 26. In fact, the return mechanisms in all the solutions in example 1 can be of the tension spring, the pressure spring, the torsion spring, the elastic cord, the shoe hook or shoe cover structure.

### Example 4: elastic return double power reciprocating variable speed pedal structure

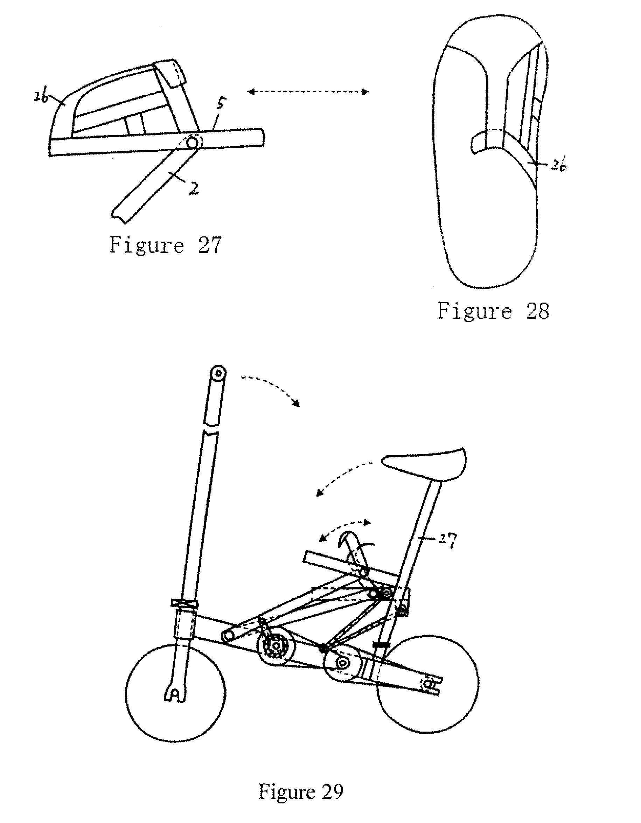

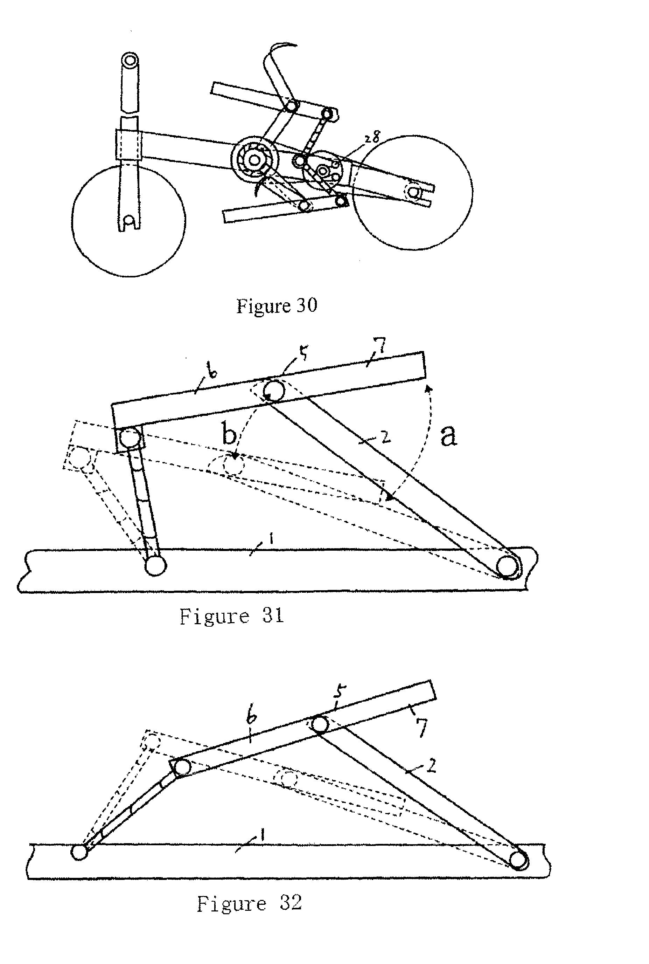

The reciprocating variable speed pedal structure in this example can be of an elastic return double power reciprocating variable speed pedal structure (see Figures 23 - 29). In Figure 23, two sets of power pressure bars 2 at left and right are connected with elastic cords 23 which are integrated and hung on a handle bar in a suspension manner. Certainly, the two elastic cords can be replaced with two torsion springs 24 (see Figure 24). Furthermore, the return mechanism of two sets of power pressure bars 2 at left and right can be of shoe hook 25 (see Figure 25) or shoe cover 26 (see Figures 27 - 28) arranged at the power pressure bar or the movable pedal. Figure 29 has the same structure as Figure 25, except that a cushion bracket 27 is arranged in Figure 29. Difference between Figure 30 and Figure 25 lie in the fact that in Figure 30, the power pressure bar 2 is directly and fixedly connected to an outer ring of the ratchet, thus exempting the power connecting bar, and a guide wheel 28 is arranged. However, the elastic return double power reciprocating variable speed pedal structure at left and right as shown in Figures 23-30 can be applied to the scooters with three wheels or four wheels only, that is, the scooters have two rear wheels (see Figure 26).

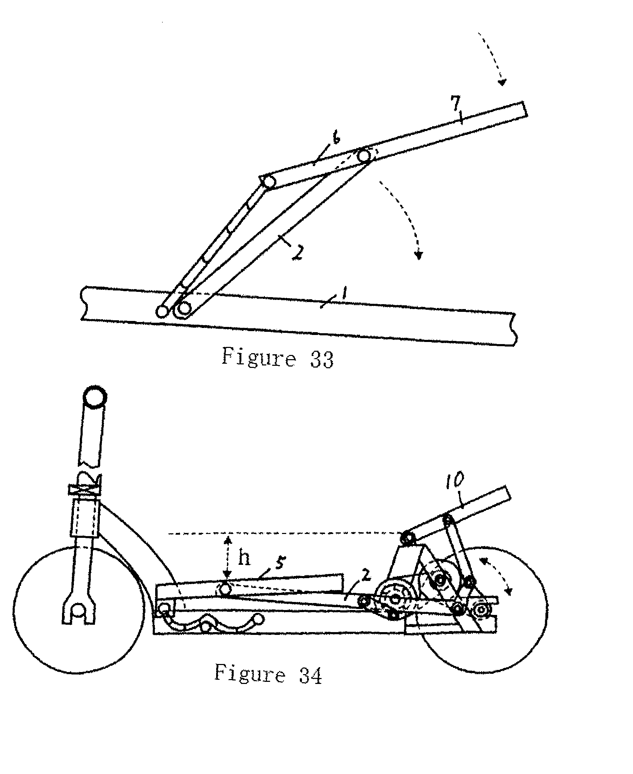

What should be pointed out is that the structure of the utility model in the examples 1 - 3 can be applied to the scooters with two, three or four wheels (including sliders). Both the movable pedal and the power variable speed transmission mechanism in the structure of the utility model in examples 1 - 4 can be provided with a safety screen. Moreover, first, the movable pedal limit end 6 in all examples of the utility model can be designed as basically long as the labor-saving end 7 (see Figure 31) or longer than the labor-saving end 7 (see Figure 32); second, the utility model can be mounted according to the mode shown in Figure 33 in the pedaling structure at left and right in example 4, thus the movable pedal labor-saving end point and the power pressure bar axial point 4 can turn clockwise during pedaling; third, the return pedal in the return pedal structure of the utility model can have a height difference h which generally is not more than 16cm (see Figure 34); fourth, the pedals of all structures in the utility model can be provided with an anti-skid limit stop so that the forward foot or the rear foot will not easily slide forward or backward on the pedal, and a groove, projection, raised line can be arranged on the surface of the pedal, or anti-skid rubber, a plastic material layer, etc. can be adhered thereto; and fifth, in addition to the scooters with the reciprocating connecting bar power transmission mechanism as shown in drawings in the specification, the utility model can also be applied to a reciprocating scooter using the existing power transmission mechanisms such as a rack and pinion structure, a structure pulled from both ends or a sliding push rod. The utility model can be used together with other powers such as an electric motor and oil engine, and can be applied to indoor exercise bicycles with pedals.

## Claims

1. A reciprocating variable speed pedal structure for a scooter, comprising a power pressure bar (2) movably connected to a scooter bracket (1), and **characterized by** further comprising a power pressure bar return mechanism (A) capable of flexing one end of the power pressure bar (2) upward, an upper end of the power pressure bar (2) being movably connected with a movable pedal (5) through a shaft (4) and dividing the movable pedal (5) into a movable pedal limit end and a movable pedal labor-saving end, and a movable connecting member (8) capable of limiting the motion range of the movable pedal (5) being arranged between the front part of the movable pedal limit end and the scooter bracket.

2. The reciprocating variable speed pedal structure according to claim 1, **characterized in that** when the movable pedal labor-saving end is pedaled, the ratio (a:b) of a down stroke (a) at an end point of the movable pedal labor-saving end to a down stroke (b) of the shaft (4) connecting the movable pedal and the power pressure bar is 1:1.2 - 3.0, preferably 1:1.7-2.3.

3. The reciprocating variable speed pedal structure according to claim 1, **characterized in that** the movable connecting member (8) between the front part of the movable pedal limit end and the scooter bracket is composed of a pull cord, a chain, a collapsible pull rod or a telescopic pull rod with two ends being connected with the front part of the movable pedal limit end and the scooter bracket respectively.

4. The reciprocating variable speed pedal structure according to claim 1, **characterized in that** the movable connecting member (8) between the front part of the movable pedal limit end and the scooter bracket is composed of a limit stop mounted on the scooter bracket, and an upper edge of the front part of the movable pedal limit end can be in contact with the limit stop.

5. The reciprocating variable speed pedal structure according to claim 1, 2, 3 or 4, **characterized in that** the power pressure bar return mechanism (A) is composed of a return pressure bar (9) and a return pedal (10) linked with the return pressure bar, and the return pressure bar (10) and the power pressure bar (2) form a flexible plate structure capable of moving up and down alternately.

6. The reciprocating variable speed pedal structure according to claim 5, **characterized in that** the return pressure bar (9), the return pedal (10), the power pressure bar (2) and the movable pedal (5) have the same structure and connection mode, and a movable connecting member (8) capable of limiting the motion range of the pedal is arranged between the front part of a return pedal limit end and the scooter bracket.

7. The reciprocating variable speed pedal structure according to claim 1, 2, 3 or 4, **characterized in that** the power pressure bar return mechanism (A) is composed of a tension spring, a pressure spring, a torsion spring or an elastic cord arranged on the power pressure bar.

8. The reciprocating variable speed pedal structure according to claim 7, **characterized in that** two sets of the power pressure bars, the movable pedals, elastic return mechanisms and the movable connecting members limiting the motion range of the movable pedals are mounted on the scooter bracket in parallel.

9. The reciprocating variable speed pedal structure according to claim 1, 2, 3 or 4, **characterized in that** the power pressure bar return mechanism (A) is composed of shoe hooks or shoe covers arranged on the power pressure bars or the movable pedals.

10. The reciprocating variable speed pedal structure according to claim 9, **characterized in that** two sets of the power pressure bars, the movable pedals, shoe hook and cover return mechanisms and the movable connecting members limiting the motion range of the movable pedals are mounted on the scooter bracket in parallel.
